# EUROPEAN PATENT SPECIFICATION

(11) **EP 2 823 921 B1**
(45) Date of publication and mention of the grant of the patent: **09.08.2017**
(21) Application number: 13758294.6
(22) Date of filing: 07.03.2013
(51) Int. Cl.: B23B 27/14, B23B 27/20, B23B 27/16

(54) **CUTTING TOOL**
SCHNEIDEWERKZEUG
OUTIL DE COUPE

(30) Priority: 08.03.2012 JP 2012051840
(43) Date of publication of application: 14.01.2015
(73) Proprietor: Sumitomo Electric Hardmetal Corp., Itami-shi, Hyogo 664-0016 (JP)
(72) Inventor: TANAKA Kunishige, Itami-shi Hyogo 664-0016 (JP); UESAKA Shinya, Itami-shi Hyogo 664-0016 (JP); OKAMURA Katsumi, Itami-shi Hyogo 664-0016 (JP)
(74) Representative: Grünecker Patent- und Rechtsanwälte PartG mbB
(86) International application number: PCT/JP2013/056251
(87) International publication number: WO 2013/133360

(56) References cited:
- WO-A2-2004/105988
- FR-A3- 2 475 438
- JP-A- 2002 018 607
- JP-A- 2005 517 538
- JP-A- 2007 144 525
- US-A- 3 142 110
- US-A1- 2004 253 063
- US-A1- 2007 071 561

## Description

### Technical Field

The present invention relates to cutting tools, such as cutting tools for turning, formed by attaching a cutting insert, for which corner changing can be performed, to a tool holder. More particularly, the present invention relates to a cutting tool which has a large number of usable corners and is thereby cost effective, which reduces cutting force during machining, and which ensures high rigidity.

### Background Art

Some known cutting inserts have five or more corners. For example, PTL 1 given below discloses a heptagonal cutting insert.

With a cutting insert for which corner changing can be performed, as the number of corners increases, the cost per corner decreases and the economic advantage increases. However, there are no cutting inserts having a regular polygonal shape with five or more corners for, for example, cutting tools for turning.

### Citation List

### Patent Literature

PTL 1: Japanese Unexamined Patent Application Publication No. 2008-23660

### Summary of Invention

### Technical Problem

As described above, the greater the number of corners of the cutting insert, the more the cutting insert is economically advantageous and cost effective. However, when, for example, the outer periphery of a cylindrical workpiece is cut by using a cutting tool formed by attaching a cutting insert having a regular hexagonal shape to a tool holder, the cutting force is increased and the machining stability is reduced. As a result, the machining accuracy is also reduced. In addition, since the cutting force is increased, the life of the cutting insert is reduced.

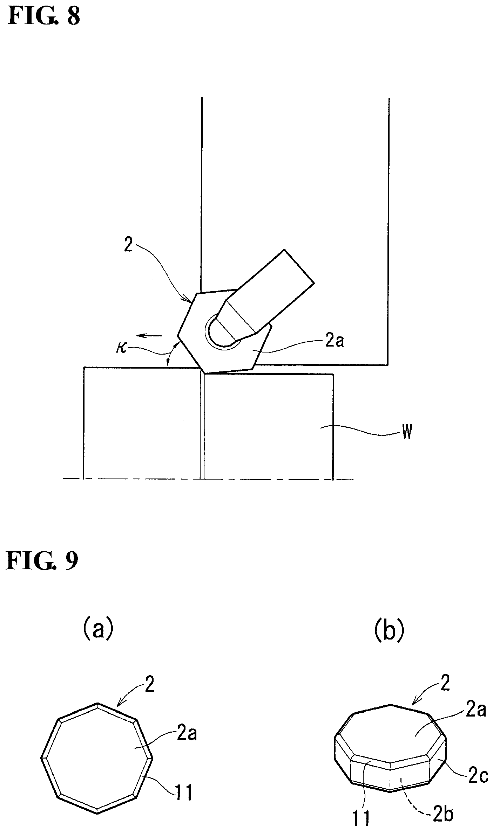

There are two reasons why the cutting force is increased. The first reason is that, referring to Fig. 8, in the case where a cutting insert 2 is used with a top surface 2a or a bottom surface thereof serving as a rake face (that is, in so-called horizontal orientation), it is necessary to form a nose-radius on each comer so that the corner of the cutting edge is not sharp, and the nose-radius increases the cutting force.

Also, as the numbers of usable corners of the cutting insert increase, a side cutting edge angle (entering angle) κ at the time when the tool is used decreases. This also increases the cutting force (second reason). Document WO 2004/105988 A2 relates to a cutting tool according to the preamble of claim 1, having a plurality of cutting inserts mounted about the periphery of a cutter body. The insert has radially extending projections each including a front cutting edge and rear cutting edge. Front and rear cutting edges from different adjacent projections together define an individual cutting side of the insert. The cutter body has a pocket for each insert. The insert engages the pocket side wall at multiple locations using only the front teeth from two or more projections. This permits a single cutter body and pocket design to be used with different insets and allows the inserts' radial rake angle to be varied from one insert to the next by varying the front tooth height.

An object of the present invention is to provide a cutting tool including a cutting insert for which corner changing can be performed, the cutting tool having a large number of usable corners and thereby being cost effective, reducing cutting force during machining, and ensuring high rigidity.

### Solution to Problem

To achieve the above-described object, according to the present invention, a negative-type cutting insert having a regular polygonal shape with five to eight corners is attached to an end of a tool holder such that one of two adjacent sides of an outer peripheral surface serves as a rake face having a negative rake angle, the other of the two adjacent sides serves as a front flank face, a ridge between the two adjacent sides serves as an end cutting edge having an end cutting edge angle, and a ridge between the side that serves as the rake face and one of top and bottom surfaces serves as a side cutting edge, and such that corner changing can be performed.

The cutting insert included in the tool according to the present invention is preferably formed of a hard sintered compact, such as a sintered compact of CBN or a diamond compact.

Ridge portions between the outer peripheral surface and the top and bottom surfaces of the cutting insert and ridge portions between adjacent sides of the outer peripheral surface of the cutting insert may be subjected to a reinforcing treatment by chamfering or honing.

### Advantageous Effects of Invention

With the cutting tool according to the present invention, since a cutting insert having a polygonal shape with five to eight corners is used, a large number of usable corners are provided. When the cutting insert is used in such an orientation that the end cutting edge angle is provided, the number of usable corners is twice the number of corners of the polygonal shape (corners adjacent to the top surface and corners adjacent to the bottom surface are usable). Therefore, the cost per the number of corner can be reduced, and the cost effectiveness can be increased.

In addition, when the outer peripheral surface of the cutting insert is used as the rake face, it is not necessary to form the nose-radius at each corner. Therefore, the increase in cutting force due to the nose-radius does not occur.

In addition, since the outer peripheral surface serves as the rake face, the side cutting edge angle (entering angle) can be increased. When, for example, the end cutting edge angle (sub-entering angle) is 5°, the side cutting edge angle is 85° irrespective of the number of corners.

In the case where a cutting insert having a regular hexagonal shape with a corner angle of 120° is used in horizontal orientation, when the end cutting edge angle 5°, the side cutting edge angle is 55°. In the case where a cutting insert having a regular octagonal shape with a corner angle of 135° is used, when the end cutting edge angle 5°, the side cutting edge angle is 40°. As compared to these cases, the side cutting edge angle can be significantly increased.

Accordingly, owing to synergistic effects, the increase in the cutting force can be reduced, and the machining stability, machining accuracy, and life of the cutting insert can be increased.

Furthermore, since the cutting insert is used in vertical orientation so that the outer peripheral surface serves as a rake face, the rigidity of the cutting insert can be increased.

### Brief Description of Drawings

[Fig. 1] Figure 1 is a perspective view of an example of a cutting tool according to the present invention.
[Fig. 2] Figure 2 is a side view of the cutting tool illustrated in Fig. 1.
[Fig. 3] Figure 3 is a plan view of the cutting tool illustrated in Fig. 1.
[Fig. 4] Figure 4 is a front view of the cutting tool illustrated in Fig. 1.
[Fig. 5] In Fig. 5, parts (a) to (f) are perspective views of examples of cutting inserts.
[Fig. 6] Figure 6 is a perspective view illustrating the manner in which the cutting tool illustrated in Fig. 1 is used.
[Fig. 7] Figure 7 is a plan view illustrating the manner in which the cutting tool illustrated in Fig. 1 is used.
[Fig. 8] Figure 8 illustrates a side cutting edge angle of a tool that is used in such a state that a cutting insert having a regular hexagonal shape is set in horizontal orientation.
[Fig. 9] In Fig. 9, part (a) is a plan view illustrating an example of a cutting insert having a regular octagonal shape, and part (b) is a perspective view of the cutting insert.
[Fig. 10] In Fig. 10, part (a) is a top view of a cutting insert whose basic shape is a regular hexagon and in which adjacent sides of each of top and bottom surfaces has long and short lengths; part (b) is a perspective view of the cutting insert; part (c) illustrates an outer peripheral surface viewed in the direction of arrow A in part (a); and part (d) illustrates the outer peripheral surface viewed in the direction of arrow B in part (a).

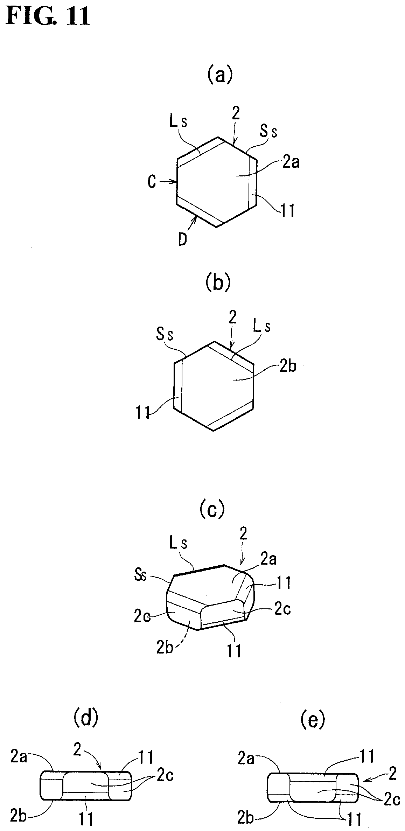

[Fig. 11] In Fig. 11, part (a) is a top view of a cutting insert whose basic shape is a regular hexagon, in which adjacent sides of each of top and bottom surfaces has long and short lengths, and in which the short sides of the bottom surface are at the positions corresponding to the positions of the long sides of the top surface; part (b) is a bottom view of the cutting insert; part (c) is a perspective view of the cutting insert; part (d) illustrates an outer peripheral surface viewed in the direction of arrow C in part (a); and part (e) illustrates the outer peripheral surface viewed in the direction of arrow D in part (a).
[Fig. 12] In Fig. 12, part (a) is a top view of a cutting insert whose basic shape is a regular octagon and in which adjacent sides of each of top and bottom surfaces has long and short lengths; part (b) is a perspective view of the cutting insert; part (c) illustrates an outer peripheral surface viewed in the direction of arrow E in part (a); and part (d) illustrates the outer peripheral surface viewed in the direction of arrow F in part (a). Description of Embodiments

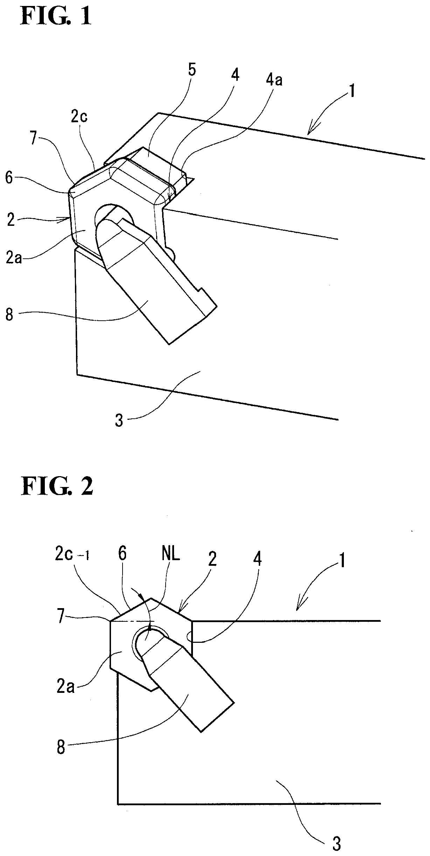

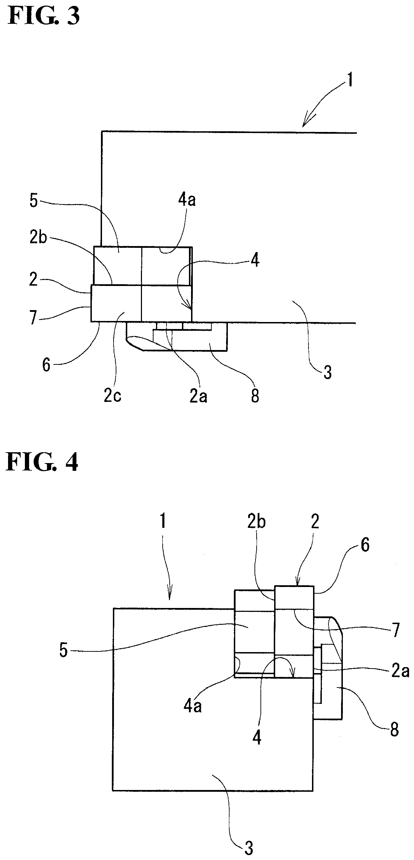

Cutting tools according to embodiments of the present invention will now be described with reference to Figs. 1 to 12.

A cutting tool 1 illustrated in Figs. 1 and 2 is a cutting tool for turning. The cutting tool 1 includes a cutting insert 2 having a regular polygonal shape. Here, the cutting insert 2 is a negative-type cutting insert having a regular hexagonal shape in which an outer peripheral surface 2c is orthogonal to top and bottom surfaces 2a and 2b. The cutting insert 2 is detachably attached to a support seat 4 provided at an end of a tool holder 3.

The support seat 4 is formed by cutting into a side surface of the tool holder 3 in a width direction of the holder at a corner where the side surface, a top surface, and a front surface of the tool holder 3 meet. A main seat surface 4a of the support seat 4 extends vertically. A plank 5 is placed on the main seat surface 4a of the support seat 4, and the cutting insert 2 is seated on the plank 5.

The cutting insert 2 used in this example is formed of a sintered compact of CBN. Although the cutting insert 2 is not limited to the sintered compact of CBN, since the cutting tool of the present invention is used at a large negative rake angle, from the viewpoint of wear resistance, at least a portion used for cutting is preferably formed of a hard sintered compact, such as a sintered compact of CBN or a diamond compact, instead of a common cemented carbide.

Although the two end surfaces of the negative-type cutting insert 2 that face away from each other are not at the top or bottom, one of the end surfaces is called a top surface, and the other is called a bottom surface for convenience.

The cutting insert 2 is attached to the support seat 4 in vertical orientation, that is, such that one of the top and bottom surfaces 2a and 2b serves as a main flank face, one of two adjacent sides of the outer peripheral surface 2c serves as a rake face having a negative rake angle, the other of the two adjacent sides serves as a front flank face, a ridge between the side that serves as the rake face and one of the top and bottom surfaces 2a and 2b serves as a side cutting edge (main cutting edge) 6, a ridge between the two adjacent sides of the outer peripheral surface 2c at a corner of the outer peripheral surface 2c serves as an end cutting edge (sub-cutting edge) 7 having an end cutting edge angle.

The cutting insert 2 is fixed to the tool holder 3 with a pressing member 8. The pressing member 8 may have a known structure. The cutting insert 2 is generally fixed by using, for example, a pressing member fastened with a clamp bolt or a draw-in type pressing member, and such a common pressing member may be used. In the case where the cutting insert has an attachment hole at the center, the cutting insert may instead be fixed with a clamp screw. Since the cutting insert is detachably attached by using the pressing member or the clamp screw, switching of the corner to be used (corner changing) can be performed.

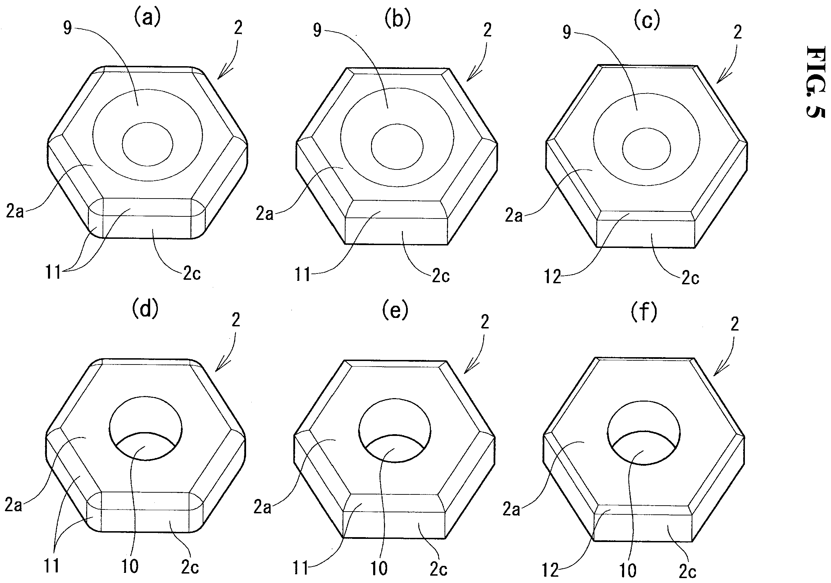

Figure 5 illustrates preferred examples of cutting inserts 2. Each of the cutting inserts 2 illustrated in parts (a) to (c) of Fig. 5 has a tapered clamping recess 9 at the center of the top surface 2a. Each of the cutting inserts 2 illustrated in parts (d) to (f) of Fig. 5 has an attachment hole 10 at the center of the top surface 2a, the attachment hole 10 extending to the bottom surface.

In the cutting inserts 2 illustrated in parts (a) and (d) of Fig. 5, the ridge portions between the outer peripheral surface 2c and the top and bottom surfaces 2a and 2b and the ridge portions between the adjacent sides of the outer peripheral surface 2c are subjected to a reinforcing treatment by honing. In parts (a) and (d) of Fig. 5, reference numeral 11 denotes the portions subjected to the reinforcing treatment by honing.

In the cutting inserts 2 illustrated in parts (b) and (e) of Fig. 5, only the ridge portions between the outer peripheral surface 2c and the top and bottom surfaces 2a and 2b are subjected to the reinforcing treatment by honing. Also in parts (b) and (e) of Fig. 5, reference numeral 11 denotes the portions subjected to the reinforcing treatment by honing.

In the cutting inserts 2 illustrated in parts (c) and (f) of Fig. 5, the ridge portions between the outer peripheral surface 2c and the top and bottom surfaces 2a and 2b are subjected to a reinforcing treatment by chamfering. In parts (c) and (f) of Fig. 5, reference numeral 12 denotes the portions subjected to the reinforcing treatment by chamfering.

Although all of the cutting inserts 2 for the illustrated cutting tool have a regular hexagonal shape, the cutting tool according to the present invention may instead include a cutting insert having a regular pentagonal shape, a regular heptagonal shape, or a regular octagonal shape. Parts (a) and (b) of Fig. 9 illustrate an example of a cutting insert having a regular octagonal shape.

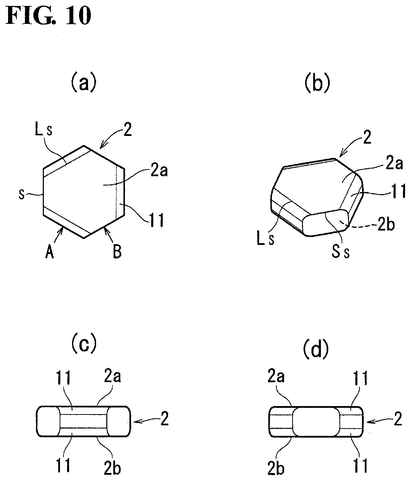

In the above-described cutting inserts, all of the ridges between the outer peripheral surface and the top and bottom surfaces are removed by honing or chamfering. However, as illustrated in Figs. 10 to 12, every other ridge may instead be removed. The basic shape of the cutting insert 2 illustrated in Fig. 10 is a regular hexagon with a corner angle of 120°. Ridge portions between the outer peripheral surface 2c and the top and bottom surfaces 2a and 2b at every other side of the basic shape are removed, so that each of the top and bottom surfaces 2a and 2b has long sides Ls and short sides Ss that are alternately arranged.

With the cutting insert 2 illustrated in Fig. 10, the ridge portions between the outer peripheral surface 2c and the top surface 2a and the ridge portions between the outer peripheral surface 2c and the bottom surface 2b are removed at the same sides between the top and bottom surfaces. However, as illustrated in Fig. 11, the ridge portions may instead be removed at different sides between the top and bottom surfaces (so that the long sides Ls on the top surface 2a and the short sides Ss on the bottom surface 2b overlap).

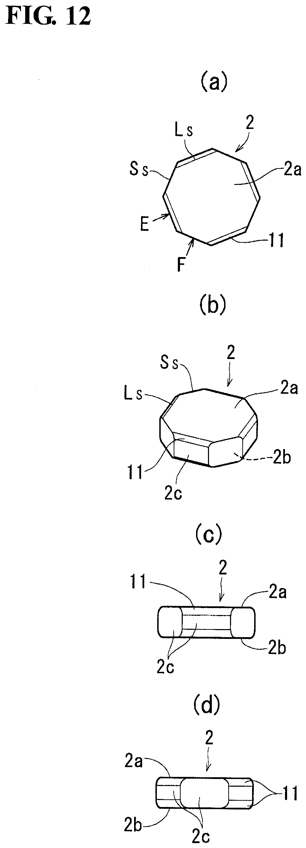

The basic shape of the cutting insert 2 illustrated in Fig. 12 is a regular octagon with a corner angle of 135°. Ridge portions between the outer peripheral surface 2c and the top and bottom surfaces 2a and 2b at every other side of the basic shape are removed, so that each of the top and bottom surfaces 2a and 2b has long sides Ls and short sides Ss that are alternately arranged.

Also with the cutting insert 2 illustrated in Fig. 12 whose basic shape is a regular octagon, the ridge portions between the top surface 2a and the outer peripheral surface 2c and the ridge portions between the bottom surface 2b and the outer peripheral surface 2c may be removed in two ways: they may either be removed at the same sides or at different sides between the top and bottom surfaces.

The cutting inserts illustrated in Figs. 9 to 12 may also have tapered clamping recesses in the top and bottom surfaces thereof as necessary.

Referring to Fig. 2, when it is assumed that the cutting insert 2 is arranged such that a side of the top surface (or the bottom surface) thereof extends vertically, the side of the outer peripheral surface 2c that serves as a rake face (side 2_{C-1} in Fig. 2) has a negative rake face angle NL of 30° (here, the negative rake face angle is a value obtained by subtracting 90° from the corner angle of the cutting insert having a regular polygonal shape).

The negative rake face angle NL is 18° when the cutting insert has a regular pentagonal shape, 39° when the cutting insert has a regular heptagonal shape, and 45° when the cutting insert has a regular octagonal shape. When, for example, the negative rake face angle NL is 45°, the negative rake angle is extremely large. However, it has been experimentally confirmed that cutting inserts formed of a hard sintered compact, such as a sintered compact of CBN, can be put into practical use even when the rake angle is set to such a large angle.

Thus, with the cutting tool according to the present invention, a cutting insert having a regular polygonal shape with five to eight corners is used in such an orientation that the outer peripheral surface thereof serves as a rake face. Therefore, the rake face naturally has a negative rake face angle. Therefore, it is not necessary to perform a process of forming a native rake face for a ridge portion at a cutting edge, the process being performed when the cutting insert is used in horizontal orientation. This also contributes to reduction of cost.

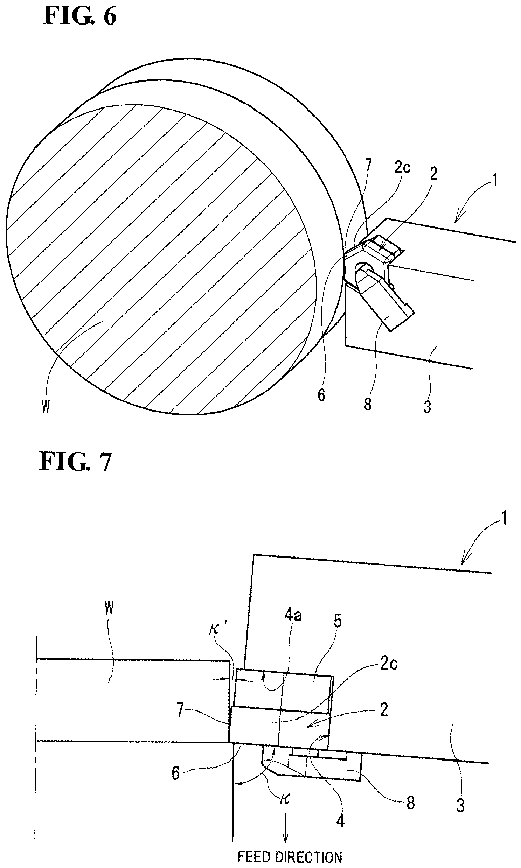

Figure 6 is a perspective view illustrating the manner in which the cutting tool illustrated in Fig. 1 is used. Figure 7 is a plan view illustrating the manner in which the cutting tool is used. As is clear from Fig. 7, with the cutting tool 1 of the present invention, since the cutting insert 2 is used in vertical orientation, the side cutting edge angle κ (angle between the side cutting edge 6 and an outer peripheral surface parallel to the axial center of the workpiece W) is significantly greater than that in the case where the cutting insert is in horizontal orientation as illustrated in Fig. 8. The side cutting edge angle κ is determined as 90° - κ', where κ' is an end cutting edge angle. Since the end cutting edge angle κ' (angle between the end cutting edge 7 and the outer peripheral surface parallel to the axial center of the workpiece W) may be as small as several degrees, the side cutting edge angle κ may be set to 80° or more. Accordingly, the increase in the cutting force can be reduced, and the machining stability, machining accuracy, and life of the cutting insert can be increased.

### Reference Signs List

- 1: cutting tool
- 2: cutting insert
- 2a: top surface
- 2b: bottom surface
- 2c: outer peripheral surface
- 3: tool holder
- 4: support seat
- 4a: main seat surface
- 5: plank
- 6: side cutting edge
- 7: end cutting edge
- 8: pressing member
- 9: tapered recess
- 10: attachment hole
- 11: ridges subjected to reinforcing treatment by honing
- 12: ridges subjected to reinforcing treatment by chamfering
- κ: side cutting edge angle
- κ': end cutting edge angle
- NL: negative rake face angle
- W: workpiece
- Ls: long side
- Ss: short side

## Claims

1. A cutting tool in which a cutting insert (2) having a regular polygonal shape with five to eight corners is attached to an end of a tool holder (3) such that
one of two adjacent sides of an outer peripheral surface (2c) serves as a rake face having a negative rake angle, the other of the two adjacent sides serves as a front flank face; and
a ridge between the two adjacent sides serves as an end cutting edge (7) having an end cutting edge angle (κ');
**characterized in that**
a ridge between the side that serves as the rake face and one of top and bottom surfaces (2a, 2b) serves as a side cutting edge (6), and **in that** corner changing can be performed.

2. The cutting tool according to Claim 1, wherein a basic shape of the cutting insert is a regular hexagon or a regular octagon, ridge portions between the outer peripheral surface (2c) and the top and bottom surfaces (2a, 2b) at every other side of the basic shape being removed so that each of the top and bottom surfaces has long sides (Ls) and short sides (Ss) that are alternately arranged.

3. The cutting tool according to Claim 1 or 2, wherein the cutting insert (2) is formed of a sintered compact of CBN or a diamond compact.

4. The cutting tool according to any one of Claims 1 to 3, wherein ridge portions between the outer peripheral surface (2c) and the top and bottom surfaces (2a, 2b) of the cutting insert (2) are subjected to a reinforcing treatment by chamfering or honing.

5. The cutting tool according to any one of Claims 1 to 4, wherein ridge portions between adjacent sides of the outer peripheral surface (2c) of the cutting insert (2) are subjected to a reinforcing treatment by chamfering or honing.

## Patentansprüche

1. Schneidwerkzeug, bei dem ein Schneideinsatz (2) mit einer regelmäßigen polygonalen Form mit fünf bis acht Ecken an einem Ende eines Werkzeughalters (3) so befestigt ist, dass
eine von zwei benachbarten Seiten einer Außenumfangsfläche (2c) als eine Spanfläche mit einem negativen Spanwinkel dient, die andere der beiden benachbarten Seiten als eine vordere Flankenfläche dient; und
eine Kante zwischen den beiden benachbarten Seiten als Stirnschneidkante (7) mit einem Stirnschneidkantenwinkel (κ') dient;
**dadurch gekennzeichnet, dass**
eine Kante zwischen der als Spanfläche dienenden Seite und einer der oberen und unteren Flächen (2a, 2b) als Seitenschneidkante (6) dient, und ein Tauschen der Ecken durchführbar ist.

2. Schneidwerkzeug nach Anspruch 1, wobei eine Grundform des Schneideinsatzes ein regelmäßiges Sechseck oder ein regelmäßiges Achteck ist, Kantenabschnitte zwischen der Außenumfangsfläche (2c) und der oberen und unteren Fläche (2a, 2b) an jeder zweiten Seite der Grundform entfernt ist, sodass jede der oberen und unteren Flächen lange Seiten (Ls) und kurze Seiten (Ss) aufweist, die abwechselnd angeordnet sind.

3. Schneidwerkzeug nach Anspruch 1 oder 2, wobei der Schneideinsatz (2) aus einem CBN-Sinterkörper oder einem Diamantpressling gebildet ist.

4. Schneidwerkzeug nach einem der Ansprüche 1 bis 3, wobei die Kantenabschnitte zwischen der Außenumfangsfläche (2c) und der oberen und unteren Fläche (2a, 2b) des Schneideinsatzes (2) durch Fasen oder Honen eine Verstärkungsbehandlung aufweisen.

5. Schneidwerkzeug nach einem der Ansprüche 1 bis 4, wobei die Kantenabschnitte zwischen benachbarten Seiten der Außenumfangsfläche (2c) des Schneideinsatzes (2) durch Fasen oder Honen eine Verstärkungsbehandlung aufweisen.

## Revendications

1. Outil de coupe dans lequel une pièce rapportée de coupe (2) ayant la forme d'un polygone régulier comportant cinq à huit coins est reliée à une extrémité d'un porte-outil (3) de sorte que
l'un de deux côtés adjacents d'une surface périphérique extérieure (2c) sert de face de coupe ayant un angle de coupe négatif, l'autre des deux côtés adjacents sert de face de flanc avant ; et
une arête entre les deux côtés adjacents sert de bord de coupe d'extrémité (7) présentant un angle de bord de coupe d'extrémité (κ') ;
**caractérisé en ce qu'**une arête entre le côté qui sert de face de coupe et l'une des surfaces supérieure et inférieure (2a, 2b) sert de bord de coupe latéral (6) et qu'un changement de point d'attaque peut être effectué.

2. Outil de coupe selon la revendication 1, dans lequel une forme de base de la pièce rapportée de coupe est un hexagone régulier ou un octogone régulier, des parties d'arête entre la surface périphérique extérieure (2c) et les surfaces supérieure et inférieure (2a, 2b) étant éliminées au niveau d'un côté sur deux de la forme de base, de sorte que chacune des surfaces supérieure et inférieure présente des côtés longs (Ls) et des côtés courts (Ss) agencés en alternance.

3. Outil de coupe selon la revendication 1 ou 2, dans lequel la pièce rapportée de coupe (2) est formée d'une pièce comprimée frittée en CBN ou d'une pièce comprimée en diamant.

4. Outil de coupe selon l'une quelconque des revendications 1 à 3, dans lequel des parties d'arête entre la surface périphérique extérieure (2c) et les surfaces supérieure et inférieure (2a, 2b) de la pièce rapportée de coupe (2) sont soumises à un traitement de renforcement par chanfreinage ou pierrage.

5. Outil de coupe selon l'une quelconque des revendications 1 à 4, dans lequel des parties de crête entre des côtés adjacents de la surface périphérique extérieure (2c) de la pièce rapportée de coupe (2) sont soumises à un traitement de renforcement par chanfreinage ou pierrage.
